(19) Europäisches Patentamt / European Patent Office / Office européen des brevets

(11) **EP 1 993 017 A1**

(12) **DEMANDE DE BREVET EUROPEEN**
publiée en application de l'article 158, paragraphe 3 de la CBE

(43) Date de publication:
**19.11.2008 Bulletin 2008/47**

(51) Int Cl.:
*G05D 1/08* (2006.01)   *B64G 1/24* (2006.01)

(21) Numéro de dépôt: **06841713.8**

(86) Numéro de dépôt international:
**PCT/ES2006/000660**

(22) Date de dépôt: **20.11.2006**

(87) Numéro de publication internationale:
**WO 2007/099177 (07.09.2007 Gazette 2007/36)**

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **28.02.2006   ES 200600474**

(71) Demandeur: **Advanced Dynamic Systems, S.L.**
**01510 Miñano Alava (ES)**

(72) Inventeurs:
• **GUERRERO PADRÓN, Juan**
  **E-28009 Madrid (ES)**
• **SANZ ARANGUEZ SANZ, Pedro**
  **E-28028 Madrid (ES)**

(74) Mandataire: **Urizar Barandiaran, Miguel Angel**
**Gordóniz 22, 5**
**48012 Bilbao (Bizkaia) (ES)**

(54)   **ACTIONNEUR GYROSCOPIQUE PERMETTANT DE COMMANDER DES SATELLITES**

(57)   Actionneur gyroscopique pour le contrôle de satellite, qui est composé par :

a) des sous-systèmes mécaniques, qui suivant les nécessités sont au nombre d' un, deux ou trois et qui ont chacun un couple d'anneaux, d'inertie égale sur leurs propres axes principaux, placés concentriquement ; des moyens mécaniques pour appuyer les anneaux de manière à ce qu'ils ne leur soient permis que deux degrés de liberté (spin et nutation) ; et des moyens électromécaniques qui servent à réaliser les mouvements des anneaux, placés dans l'espace intérieur des anneaux ou à leur extérieur, selon la dimension des anneaux ; qui donnent aux anneaux des vitesses de spin et de nutation égales et contraires ; et qui permettent la rotation de nutation en tours complets de l'anneau correspondant , dans le but de produire un vecteur de couple résultant, de direction préétablie et normale au vecteur de vitesse de nutation ;

b) un sous-système de contrôle qui est composée d'un microprocesseur programmé pour réaliser le contrôle de rotation du satellite autour d'1,2 ou 3 axes, avec les capacités de contrôler à la fois 1, 2 ou 3 sous-systèmes mécaniques, et de communiquer avec l'ordinateur principal du satellite.

**Fig. 1**

**Description**

OBJET DE L' INVENTION

La présente invention concerne un Actionneur Gyroscopique qui permet le contrôle d'attitude (contrôle d'orientation) d'une plate-forme spatiale (satellite) sur laquelle il est embarqué. Pour obtenir ce contrôle d'attitude, il applique la loi de conservation du moment cinétique, sans avoir recours à l'action de couples extérieurs

Le contrôle d'attitude est absolument nécessaire sur les engins spatiaux puisqu'il permet l'orientation de leurs modèles embarqués et aussi l'exécution des manoeuvres.

La nouveauté de cette invention repose sur sa capacité pour produire des couples très élevés avec un dispositif mécanique très léger et peu volumineux par rapport à ceux utilisés actuellement; et qui sont fondamentalement les roues à réaction (Reaction Wheels Assemblies), les moments cinétiques roues (Momentum Wheel Assemblies) et les gyrodynes ou actionneurs gyroscopiques, souvent désignés par le sigle CMG (Control Moment Gyro).

L'antécédent le plus proche de l'objet de cette invention est décrit dans le brevet N° PCT/ES02/00482. Cette invention présente une série de différences inventives qui la rendent spécialement adéquate pour développer ses capacités dans l'espace.

Les principales différences avec le mécanisme dénommé Actionneur Gyroscopique sont les suivantes :

1. L' Actionneur Gyroscopique Avancé est composé d'un ou de plusieurs sous-systèmes mécaniques et d'un sous-système de contrôle. Le mécanisme du brevet N° PCT/ES02/00482 est un système exclusivement mécanique.

2. Chaque sous-système de l'Actionneur Gyroscopique Avancé est composé exclusivement de deux anneaux concentriques qui provoquent, au moyen d'un mouvement coordonné de leurs rotations respectives de spin et de nutation, un vecteur de couple de direction connue d'avance, de module de pulsation et en sens alternatif. La combinaison vectorielle du couple produit par chaque sous-système mécanique génère un couple résultant, qui est utilisé pour contrôler l'attitude de la plate-forme spatiale. Ce couple, suivant le nombre de sous-systèmes mécaniques dont il dispose, ne pourra être produit que dans une seule direction, dans une direction quelconque d'un plan, ou bien dans une direction quelconque de l'espace. Le mécanisme du Brevet N° PCT/ES02/00482 est conçu au moyen de paires d'anneaux, tous concentriques entre eux, et qui grâce à leurs mouvements contrôlés de leurs rotation de spin et de nutation, génèrent un couple de module, d'un sens constant, de direction unique et constante. Pour obtenir que ce module soit constant, il possède un dispositif mécanique additionnel dénommé inverseur de couple.

3. L'Actionneur Gyroscopique Avancé, destiné à générer des manoeuvres rotatoires sur des plateformes spatiales, profite de l'impulsion angulaire produite par une pulsation de couple pour accélérer la plate-forme sur laquelle il est embarqué ; et obtient une rotation constante quand l'action de la pulsation se termine ; et par la suite il génère une autre pulsation de couple de signe opposé à la précédente, pour produire la décélération de la plate-forme (frein), jusqu'à obtenir son arrêt complet. Ce n'est pas le fonctionnement pour lequel a été conçu le mécanisme du Brevet N° PCT/ES02/00482, étant donné que son fonctionnement concerne l'émission d'un couple constant durable dans le temps et non pas par pulsations de couple.

4. Un seul sous-système mécanique de l'Actionneur Gyroscopique Avancé est capable de générer le vecteur de couple dans une direction quelconque d'un plan, grâce à l'orientation préalable en nutation des anneaux, avant que ne se produisent les rotations coordonnées de spins et de nutation. Cette opération est contrôlée depuis le sous-système de commande, qui agit avec précision sur les moyens électromécaniques qui orientent la position préalable de nutation des anneaux. Le mécanisme du Brevet N° PCT/ES02/00482 ne contemple pas cette possibilité. La direction du vecteur couple constant généré est réalisée par rapport à un axe fixe.

5. Chaque sous-système mécanique de l'Actionneur Gyroscopique qui a la capacité de générer son vecteur de couple dans une direction quelconque d'un plan, possède une configuration mécanique qui permet à ses anneaux de réaliser des tours complets de nutation. Le mécanisme du Brevet N° PCT/ES02/00482 ne contemple pas cette possibilité de fonctionnement.

SECTEUR DE LA TECHNIQUE

Quant à l'application de l'invention, elle concerne le secteur spatial et utilise les secteurs de l'ingénierie : contrôle, mécanique, électrotechnique et électronique, qui sont exposés ci-dessous.

ÉTAT DE LA TECHNIQUE

Dans le secteur spatial, trois types de dispositifs classiques basés sur le contrôle par variation du moment angulaire interne ont déjà été développés.

De ces trois dispositifs, les deux les plus utilisés sont les Reaction Wheel Assemblies (RWA) et les Moment Wheel Assemblies (MWA) (roues à réaction et moments cinétiques roues ou volants d'inertie respectivement). Leur application est quasiment universelle pour les types de satellites avec un contrôle sur trois axes. Cependant ces mécanismes ne sont pas suffisants pour les satellites agiles. Normalement il faut quatre roues : trois absolument indispensables pour le contrôle selon trois axes ; plus une en tant que *back-up*. La principale différence entre les roues à réaction et les moments cinétiques roues, c'est la vitesse nominale de rotation de spin. Pour les roues à réaction, la vitesse angulaire de rotation de spin est nulle et s'accélère à cause de la présence des couples perturbateurs. Cette accélération de spin génère un couple virtuel de réaction qui compense la perturbation. Si la perturbation se maintient, il faut maintenir l'accélération et la roue peut alors atteindre sa vitesse maximale admissible mécaniquement (saturation). Pour qu'elle ne soit plus saturée il est nécessaire d'utiliser une force extérieure réelle (moment de décharge). Ces forces sont générées par d'autres Actionneurs tels que les magnétocoupleurs et les micro-impulseurs.

Les moments cinétiques roues tournent à une vitesse angulaire nominale de spin élevée et il se produit des petits changements dans les vitesses de spins pour compenser les couples perturbateurs qui pourraient apparaître ou pour compenser des manoeuvres du satellite. L'une des caractéristiques typiques de ces roues est sa capacité de stabiliser l'axe du satellite, dans une direction parallèle à son axe de spin sans qu'il soit besoin de varier ce spin. Cette capacité se base sur le fait que la roue se comporte comme le rotor d'un gyroscope constitué par le satellite lui-même, en lui apportant une stabilité gyroscopique.

Autant les roues à réaction que celles de moments cinétiques produisent des couples de contrôle de niveaux très bas (dixièmes ou unités de Nm.) qui tendent à se saturer très rapidement par la limitation de leur vitesse de rotation, qui est exclusivement de spin. À cause de cela, il est nécessaire que le satellite soit muni d'un relativement grand volume de propulseur pour la désaturation au moyen des couples produits par micro-impulseurs.

Les brevets relatifs à ces dispositifs sont nombreux. En voici des exemples : US005826829A et US005931421A

Le troisième type de contrôle, moins connu que les précédents, est constitué par les Gyrodynes (CMG), actionneurs gyroscopiques, qui peuvent produire un niveau de couple de forces élevé, mais qui ont pour inconvénients un mauvais contrôle de ce couple, et des poids et volumes importants.

Le Brevet US006135392A est un exemple de dispositif.

Dans l'État de la Technique, L' Actionneur Gyroscopique Avancé, basé aussi sur l'application des forces gyroscopiques, présente une particularité qui le caractérise, c'est une disposition des éléments gyroscopiques lui apportant un poids et un volume moindres que les systèmes de commande prévus avec les CMG existants ; ainsi qu' une plus grande facilité pour le contrôle de la manoeuvre, avec des couples de grandeur supérieure aux RWA et aux MWA.

Les avantages précités sur les systèmes compétiteurs s'obtiennent par la combinaison de deux caractéristiques propres au sous-système mécanique de l' Actionneur Gyroscopique Avancé : la combinaison des rotations de spin et de nutation, qui génère des couples gyroscopiques très supérieurs à ceux qui s'obtiendraient si les mouvements n'étaient que de spin (propre aux RWA et MWA) et la configuration des éléments rotatoires sur deux anneaux concentriques, qui à la différence des CMG qui possèdent deux disques, leur confèrent un volume et une masse remarquablement réduits, et sur lesquels on peut exercer un contrôle modulable.

BREVE DESCRIPTION DES CROQUIS

Figure 1. Représentation du principe physique de conservation du moment cinétique sur un disque tournant à vitesse de spin $\omega$ et de nutation $\Omega$. **H** est le moment cinétique et **N** est le couple produit. (CS) Corps du satellite.

Figure 2. Représentation des vitesses de rotation en spin $(\dot{\psi})$ et de nutation $(\dot{\theta})$,, du couple produit ($N_y$), sur 2 anneaux concentriques projetés sur le plan YZ d'inerties **I** égales (dans la description elle est appelée AGA).

$$\dot{\psi}_a = -\dot{\psi}_b = \dot{\psi} \quad ; \quad \dot{\theta}_a = -\dot{\theta}_b = \dot{\theta}$$

$$I_a = I_b = I \quad ; \quad \theta_a = -\theta_b = \theta$$

Représentation schématique de l' objet de l'invention.

Figure 3. Graphique qui indique la rotation $\delta$ de la plate-forme spatiale, sa vitesse $\dot{\delta}$ et son accélération $\ddot{\delta}$, quand les anneaux commencent à tourner en nutation d'un angle $\theta = 0°$ jusqu'à $\theta = 2\cdot\pi$. Nous observons que la plate-forme commence sa rotation, et décélère en revenant à la position angulaire $\delta = 0$.

$$\ddot{\delta} = \frac{N}{I_s} = \frac{2H\dot{\theta}}{I_s}\cos\theta$$

$$\dot{\delta} = \frac{2H}{I_s}\sin\theta$$

$$\delta = \frac{2H}{I_s\dot{\theta}}(1-\cos\theta)$$

Variation du couple, de la vitesse et de la position angulaire du satellite avec $\theta_0=0$

Figure 4. Graphique sur lequel est représenté la rotation réalisée par la plate-forme spatiale au début de la rotation de nutation des anneaux $\theta$ ; quand la rotation s'arrête avant de compléter le cycle ($\theta=2\cdot\pi$). La rotation $\delta$ de la plate-forme ne s'arrête pas dans ce cas. Les courbes de trois manoeuvres sont présentées : quand les anneaux s'arrêtent en $\theta = \pi/2$, $\theta = \pi/3$ y $\theta = \pi/4$.
Variation de la position $\delta$ du satellite (pour $\theta_0 = 0$ et différentes valeurs de l'angle d'arrêt des anneaux).

Figure 5. Idem que la figure 3 mais lorsque la nutation commence en $\theta = -\pi/2$ au lieu de $\theta = 0$.

$$\ddot{\delta} = \frac{N}{I_S} = \frac{2H\dot{\theta}}{I_S}\cos\theta$$

$$\dot{\delta} = \frac{2H}{I_S}(1+\sin\theta)$$

$$\delta = \frac{2H}{I_S}t - \frac{2H}{I_S\dot{\theta}}\cos\theta$$

Variation du couple, de la vitesse et de la position angulaire du satellite avec $\theta_0=-\pi/2$

Figure 6. Idem que la figure 4 mais lorsque la nutation commence en $\theta = -\pi/2$ au lieu de $\theta = 0$. Les positions angulaires atteintes sont le double que dans le cas de démarrage en $\theta = 0$ (cas de la figure 4).
Variation de la position $\delta$ du Satellite (pour $\theta_0 = -\pi/2$ et différentes valeurs de l'angle d'arrêt des anneaux).

Figure7. Figure de projection des anneaux sur le plan YZ sur laquelle l'inclinaison $\alpha$ de la bissectrice de la nutation peut avoir des valeurs différentes de 0. Cette possibilité de varier la bissectrice de la nutation entre les deux anneaux sert à contrôler les satellites sur deux axes, quand le couple est monté selon cette direction.
Obtention de la direction requise par le couple sur un plan (avec un seul SM fixe par rapport au satellite).

Figure 8. Représentation de la combinaison de couples provenant des anneaux de deux sous systèmes mécaniques. L'un d'eux, ayant la possibilité d'orienter la bissectrice d'ouverture en nutation des deux anneaux, génère la force $N_{xz}$. L'autre, n'ayant pas cette possibilité, génère le couple $N_y$. La combinaison des deux couples génère la force $N$, en direction $ON$ requise par la plate-forme spatiale, qui, par conséquent, peut être contrôlée sur 3 axes.
Obtention de la direction requise par le couple dans l'espace (avec deux SM fixes par rapport au satellite).

Figure 9. Sous-système mécanique introduit dans un cadre avec deux degrés de liberté, qui peut orienter son vecteur $N$ au moyen de l'orientation préalable du cadre, en utilisant des servomoteurs (S-1), (S-2).
Obtention de la direction requise par le couple dans l'espace (avec un seul mobile par rapport au satellite).

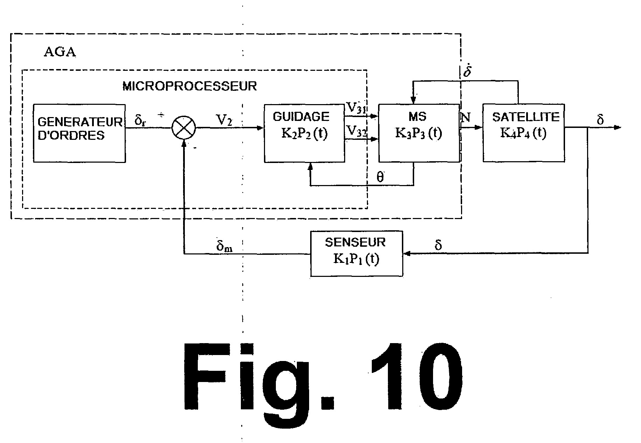

Figure 10. Diagramme de contrôle de la plate-forme spatiale sur un axe avec un seul sous-système mécanique fixe sur la propre plate-forme.
Diagramme de contrôle du satellite sur un axe (avec un seul AGA fixe par rapport au satellite).

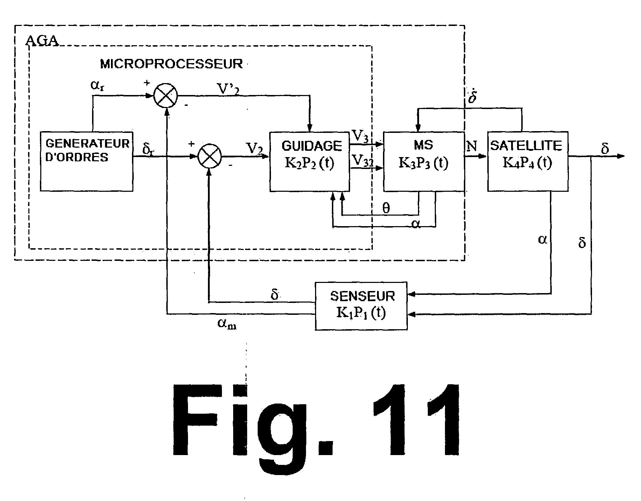

Figure 11. Diagramme de contrôle de la plate-forme spatiale sur deux axes avec un seul sous-système mécanique fixe sur la plate-forme elle-même, avec une possible orientation préalable de la bissectrice de nutation des anneaux.
Diagramme de contrôle du satellite sur deux axes (avec un seul AGA fixe par rapport au satellite).

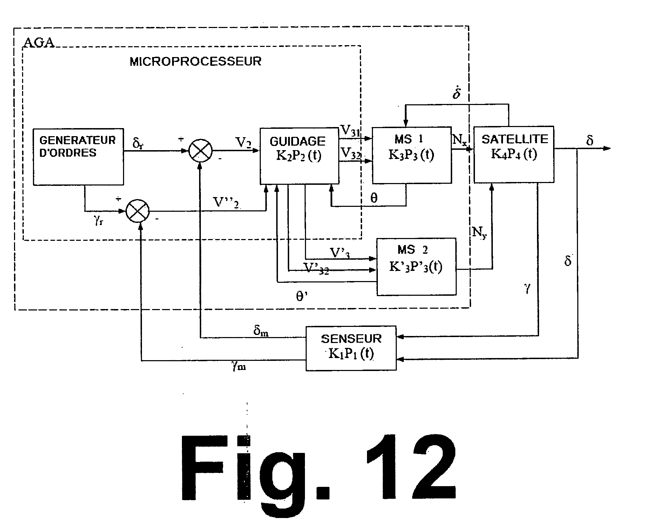

Figure 12. Diagramme de contrôle de la plate-forme spatiale sur deux axes avec deux sous-systèmes mécaniques fixes sur la plate-forme elle-même, sans la possibilité d'orientation préalable de la bissectrice de nutation des anneaux.
Diagramme de contrôle du satellite sur deux axes (avec deux AGA fixes par rapport au satellite).

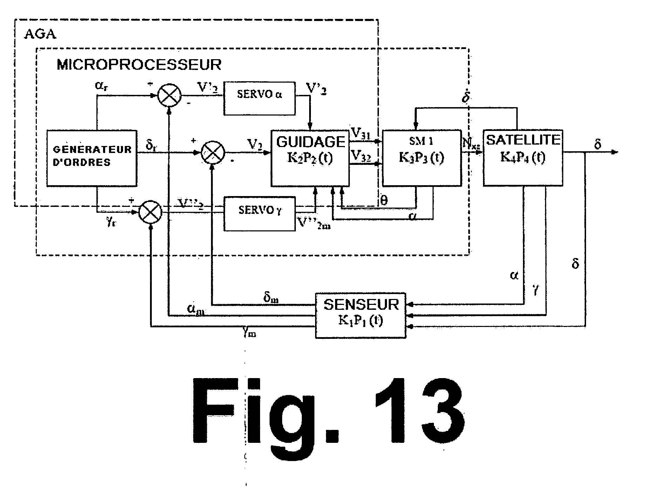

Figura 13. Diagramme de contrôle de la plate-forme spatiale sur trois axes avec un seul sous-système mécanique fixe dans un cadre avec deux degrés de liberté, assemblés sur la propre plate-forme.
Diagramme de contrôle du satellite sur trois axes (avec un seul AGA mobile par rapport au satellite).

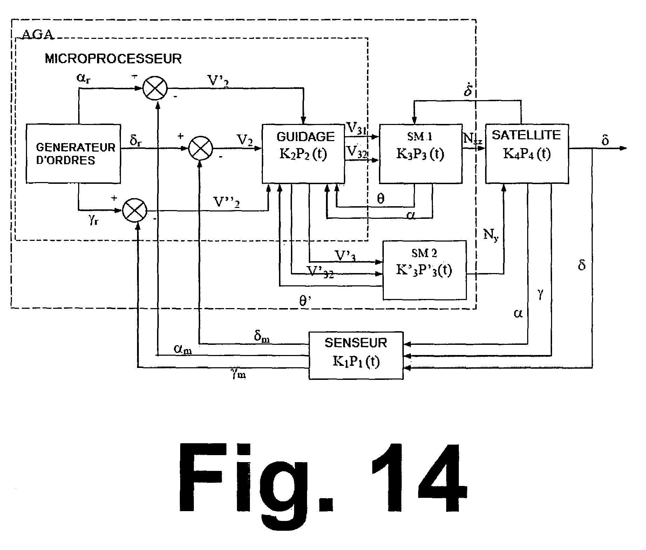

Figure 14. Diagramme de contrôle de la plate-forme spatiale sur trois axes avec deux sous-systèmes mécaniques fixes sur la plate-forme elle-même, l'un d'eux ayant la possibilité d'orientation préalable de la bissectrice de nutation des anneaux et l'autre non. Diagramme de contrôle du satellite sur trois axes (avec deux AGA fixes par rapport au satellite).

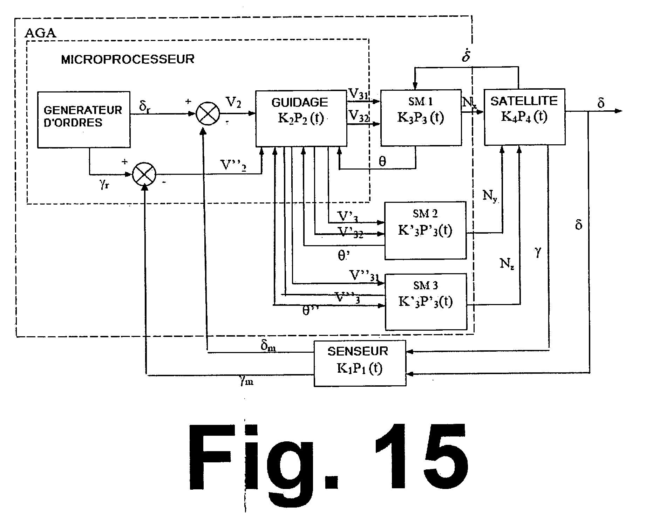

Figure 15. Diagramme de contrôle de la plate-forme spatiale sur trois axes avec trois sous-systèmes mécaniques fixes sur la plate-forme sans qu'aucun d'entre eux n'ait la possibilité d'orientation préalable de la bissectrice de nutation des anneaux.
Diagramme de contrôle du satellite sur trois axes (avec trois AGA fixes par rapport au satellite).

## DESCRIPTION DE L'INVENTION

L'Actionneur Gyroscopique Avancé (AGA) est un système basé sur deux parties différenciées : un sous-système de contrôle et un ensemble de sous systèmes mécaniques. Ces sous systèmes mécaniques sont au minimum un et trois au maximum.

L'objet de L' Actionneur Gyroscopique Avancé c'est le contrôle d'attitude d' une plate-forme spatiale. C'est-à-dire, de permettre l'orientation spatiale finale de la plate-forme à partir de son orientation initiale au départ.

Le passage d'une orientation initiale à une orientation finale se réalise par la production de couples (moments) à bord de la plate-forme, au moyen des sous-systèmes mécaniques de l' Actionneur Gyroscopique Avancé. Ces couples sont variables dans le temps et sont sous la forme de pulsations.

Chaque sous-système mécanique génère son propre couple, qui, à son départ, est contrôlé sur sa forme et sa durabilité, par le sous-système de contrôle, de manière à ce que la combinaison vectorielle de tous ces sous-systèmes mécaniques, prévue et calculée par le sous-système de contrôle, soit capable de faire manoeuvrer la plate-forme spatiale, en lui permettant de passer de la position initiale à l'orientation finale.

Le sous-système de contrôle reçoit les ordres de l'ordinateur principal du satellite pour de nouvelles orientations de la plate-forme. Pour exécuter ces ordres qui rendent ces changements possibles, l'ordinateur déchiffre l'orientation actuelle du satellite grâce aux senseurs de ce dernier (stellaires, magnétiques, etc.) ; il lit aussi la position et les vitesses des rotations, s'il y a lieu, des anneaux de tous les sous-systèmes mécaniques

Ensuite, à l'aide du logiciel de contrôle utilisé avec la carte du microprocesseur, l'ordinateur commande les sous-systèmes mécaniques dont il dispose, au moyen de signaux électriques qui agissent sur les anneaux de chaque sous-système mécanique, pour générer des positions initiales en nutation et des vitesses de rotation de spin et de nutation, selon les besoins de la manoeuvre.

Lorsque le satellite est manoeuvré, suite à l'action des sous systèmes mécaniques, le sous-système de contrôle déchiffre les positions qui sont atteintes par les senseurs de la plate-forme spatiale. Quand il est près de la position d'orientation recherchée (objectif attitude), il envoie les ordres, qu'il a calculé au préalable avec le logiciel de contrôle, aux dispositifs électromécaniques agissant sur la rotation des anneaux des sous systèmes mécaniques, pour réaliser le freinage et l'arrêt de la plateforme spatiale au moyen d'un couple résultante adéquat à la situation.

Les sous systèmes mécaniques sont constitués par les éléments suivants :

- Un support structurel, qui sert à fixer tous les éléments mécaniques qui fixe aussi le sous-système mécanique de manière rigide à la plate-forme spatiale, en permettant la transmission adéquate du couple généré.
- Deux anneaux concentriques qui sont soutenus par des bâtis. Le bâti permet la rotation de spin de l'anneau qu'il soutient ; et à son tour le bâti peut tourner en nutation, ce qui fait que l'anneau tourne solidairement avec lui, et permet ainsi que l'anneau puisse tourner à la fois en nutation et en spin (2 degrés de liberté)
- L'axe de nutation qui supporte les deux bâtis. Les bâtis tournent autour de cet axe pour réaliser les rotations en nutation.
- Des éléments électromécaniques, normalement de moteurs électriques ; il peut y en avoir un ou deux pour générer la rotation de spin des anneaux (dans ce cas le spin de chaque anneaux est contrôlé électroniquement) ; il peut y en avoir un ou deux moteurs électriques pour produire la rotation en nutation des bâtis (et donc des anneaux). Dans le cas où il y a deux moteurs pour la nutation, cela permet l'orientation préalable des deux anneaux pour l'orientation du vecteur dans une direction quelconque d'un plan.
- Des éléments mécaniques pour la transmission de la rotation des moteurs aux anneaux (spin) aux bâtis (nutation).

Le fonctionnement combiné de ces éléments produit le couple d'origine qui a la capacité de bouger la plate-forme spatiale, en combinaison avec les couples des autres sous systèmes mécaniques.

Ce fonctionnement mécanique repose sur les éléments électromécaniques de nutation et de spin qui reçoivent les signaux électriques adéquats du sous-système de contrôle, qui se traduisent en rotation des moteurs électriques respectifs. Les éléments mécaniques de transmission reçoivent les rotations des moteurs et transmettent, à leur tour, des rotations aux bâtis (nutation) et aux anneaux (spin).

En conséquence, la paire d' anneaux réalise des rotations combinées de nutation et de spin. Cette combinaison consiste en rotations symétriques sur chaque anneau qui peuvent être de spin positif ou négatif (que dorénavant nous appellerons contre-spin), et de nutation positive ou négative (que dorénavant nous appellerons contre-nutation).

Nous allons expliquer pourquoi le couple gyroscopique produit est la conséquence des mouvements de spin et de nutation des anneaux.

Les Lois de la Mécanique établissent que la variation par rapport au temps du moment cinétique angulaire, **H**, d'un mobile par rapport à un point, est égale au moment ou couple **N** par rapport au point d'application de ce mobile. C'est-à-dire :

$$\frac{d}{dt} H = N \qquad [1]$$

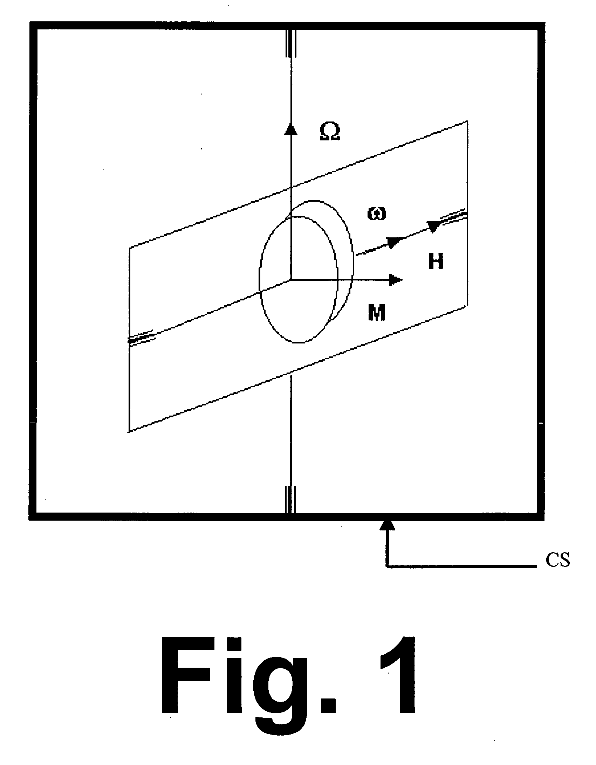

La figure 1 représente le concept de base d'un ensemble gyroscopique représenté par un disque à un moment cinétique H monté sur un cadre qui tourne à une vitesse ω. L'expression du moment cinétique est :

$$H = I\ \omega \qquad [2]$$

Si I est ω sont respectivement le moment d'inertie et la vitesse de rotation (de spin) axiales du disque.

Cette vitesse produit une variation du moment cinétique du disque qui, dans des conditions stationnaires, vaut :

$$\frac{d\ H}{d\ t} = (\Omega \times H) \qquad [3]$$

et en accord avec [1] il résulte que le disque se comporte comme si un couple lui avait été appliqué:

$$N_1 = (\Omega \times H)$$

Ce couple génère sur le satellite un autre couple de la même valeur mais en sens contraire que nous appelons **N:**

$$N = -\ (\Omega \times H) \qquad [4]$$

Ce couple a la direction et le sens représentés sur la figure 1 ; il agit sur les ancrages qui unissent l'ensemble gyroscopique au satellite et fait tourner ce dernier avec une accélération angulaire :

$$\delta^{''} = N/I_s \qquad [5]$$

δ, représentant la position angulaire du satellite et $I_s$, son moment d'inertie, tous deux rapportés sur un axe parallèle à **N** qui passe par le centre de gravité du satellite.

Le principal inconvénient de cet "ensemble gyroscopique », en ce qui concerne son application au contrôle du mouvement d'un corps auquel il s'intègre, c'est que le moment gyroscopique produit, **N**, tourne sur le plan perpendiculaire à a Ω à la même vitesse. C'est-à-dire qu'il est nécessaire de développer une stratégie combinée des valeurs de **H,** Ω avec le nombre et la disposition des éléments gyroscopiques, pour obtenir un moment qui agisse d'une forme contrôlée. Normalement cette stratégie s'avère très compliquée et entraîne des problèmes importants de zones singulières, de masses élevées, avec des marges d'erreurs, etc.

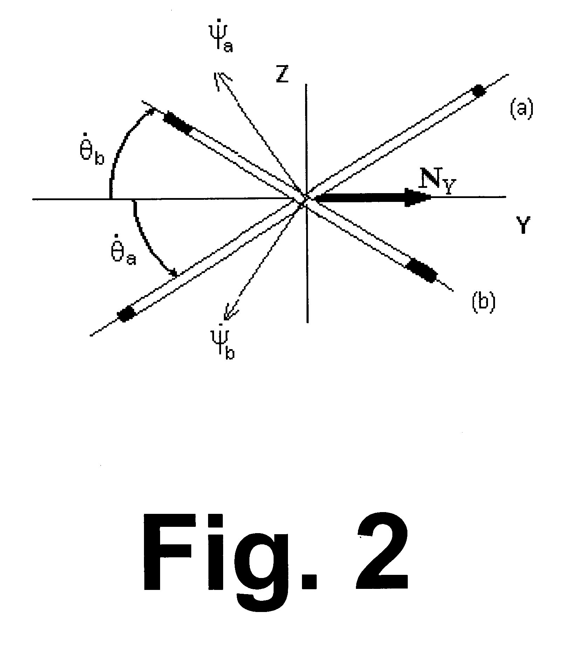

Le problème se réduit drastiquement grâce au sous-système mécanique de L'Actionneur Gyroscopique Avancé. Ce mécanisme est constitué principalement par deux anneaux concentriques, chacun d'eux tournant autour de son axe à des vitesses respectives de spin $\dot{\psi}$, $-\dot{\psi}$, le diamètre de leur tour étant commun. La figure 2 représente les directions et les valeurs comparatives des dites vitesses pour les deux anneaux. Chaque anneau constitue donc un « ensemble gyroscopique », tel qu'il a été ci- avant défini dans le cas d'un disque.

Grâce à cette disposition, on obtient maintenant dans des conditions stationnaires et comme il a été démontré dans le brevet N° PCT/ES02/00482, un couple sur le satellite de module :

$$N = 2H\dot{\theta}\cos\theta(t) \qquad [6]$$

La direction du couple est constante (axe Y de la figure 2), bien que son sens varie à chaque demi- cycle de rotation des anneaux. Le problème a été réduit drastiquement mais pas complètement. Pour obtenir des actions, une vitesse ou une attitude déterminée, il faut des formes adéquates de fonctionnement et une disposition des équipements du sous-système mécanique de l' Actionneur Gyroscopique Avancé, comme il est indiqué ci- après :

Si la vitesse de nutation $\dot{\theta}$ était constante, le couple produit par le sous-système mécanique de base aurait une forme de variation de type sinusoïdal suivant l'équation [6] et, par conséquent, l'accélération angulaire du satellite le serait aussi puisqu''elle est proportionnelle au couple selon [5].

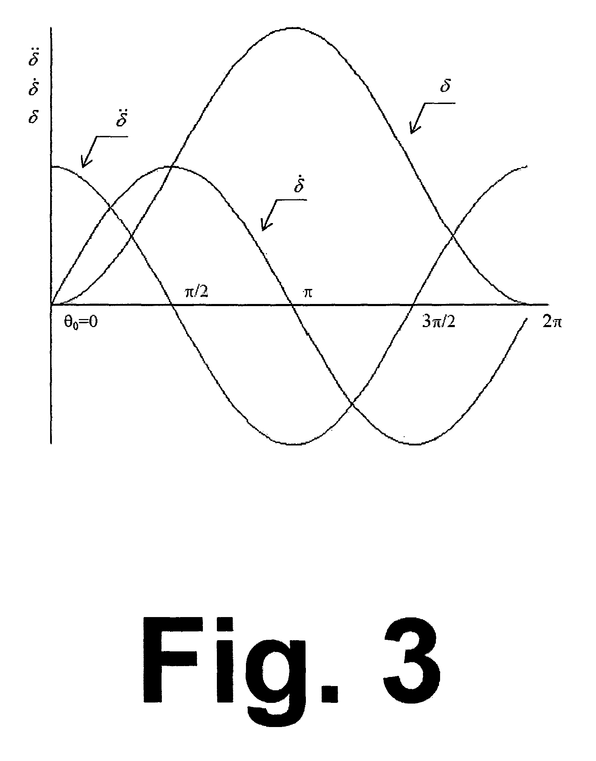

Dans la figure 3, il est supposé que l'angle de nutation zéro correspond à la position des anneaux sur le plan XY et que l'angle θ correspond à celui de l'anneau (a). Dans ces conditions, cette figure représente la vitesse qui serait communiquée au satellite, intégrale d'accélération, et qui aurait aussi une forme sinusoïdale, tout comme l'angle tourné par le satellite (intégrale de vitesse). Si les anneaux partaient d'une position de nutation zéro et avec une rotation continue des anneaux, l'angle moyen de rotation obtenu serait nul.

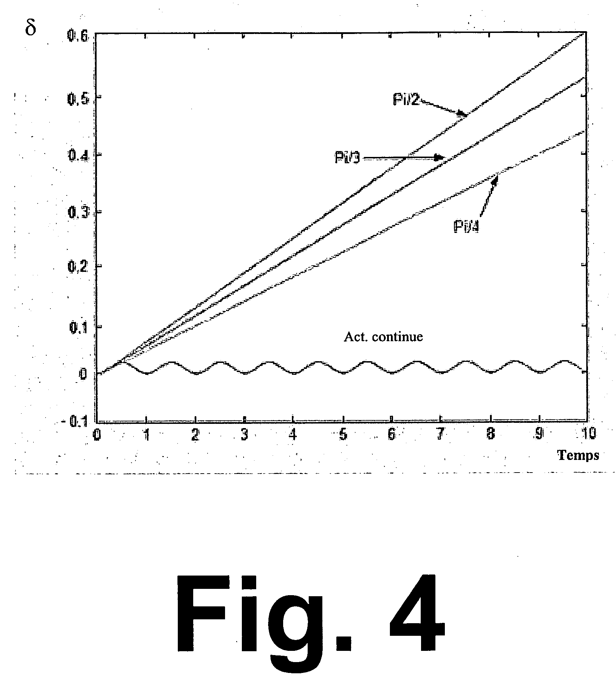

Cependant, si après avoir commencé la rotation, les anneaux s'arrêtent lorsqu''ils atteignent un angle inférieur ou égale à π/2, le satellite continuera à tourner à une vitesse constante égale à la valeur atteinte au moment de l'arrêt. Si au bout d'un certain temps, le satellite s'arrête, en faisant tourner les anneaux dans le sens contraire, le satellite aura effectué un angle plus ou moins grand selon la vitesse acquise au moment de l'arrêt des anneaux et du temps passé à vitesse constante. La position angulaire atteinte a donc la forme indiquée sur la Fig. 4 pour les différentes positions d'arrêt des anneaux.

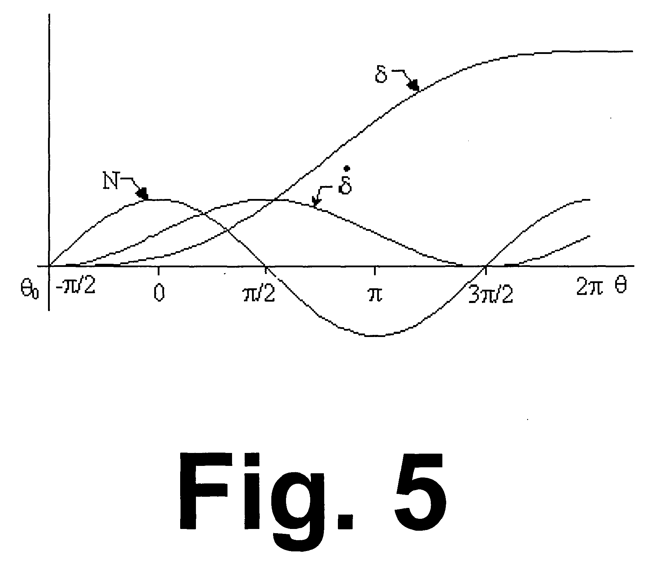

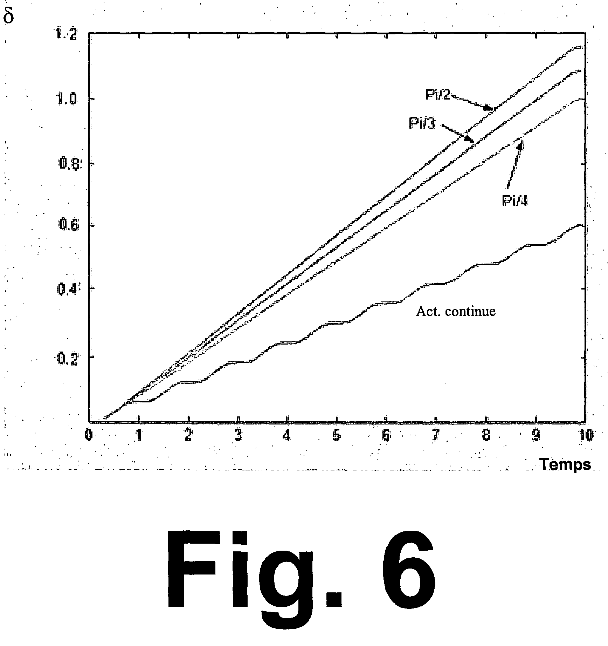

Si la position initiale du mouvement de nutation était différente de $\theta_o = 0$, le résultat serait des couples et un mouvement du satellite différents de ceux des Fig. 3 y 4. Supposons, par exemple, que $\theta_o = -\pi/2$, nous obtiendrions les valeurs indiquées sur les Fig. 5 y 6. Ces valeurs sont le double de celles des Fig. 3 y 4 (cela s'observe sur l'axe ordonnée de la figure 6), mais pouvoir commencer la nutation dans ces conditions, sans que ne fassent leur apparition des couples de réaction complexes sur le satellite, peut s'avérer difficile, ainsi que normalement, on prendra pour condition initiale $\theta_o = 0$.

Le couple ne doit pas obligatoirement avoir un module constant, mais il peut avoir différentes formes selon [6] et suivant la fonction $\dot{\theta}(t)$. Dans le cas présenté de $\dot{\theta}(t)$ constante, la variation du couple est sinusoïdale.

Comme il a déjà été signalé, au moyen d'un seul sous-système mécanique, des couples peuvent se produire sur n'importe quelle direction du plan Z Y, et non seulement dans la OY de la figure 2. Cette importante particularité est décrite ci-après.

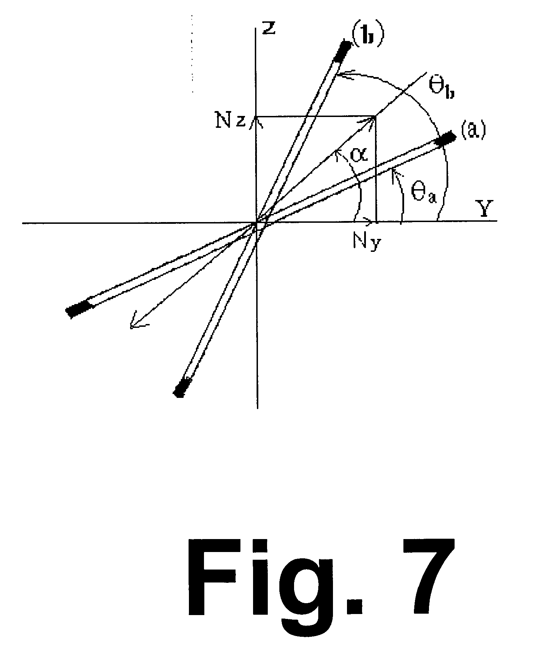

La figure 7 représente les deux anneaux de la même façon que dans la figure 2 mais la rotation de nutation des anneaux est déplacée au départ de façon différentielle pour que sa bissectrice tourne d' un angle α et l'axe Y devient Y'. En régime permanent cette bissectrice restera fixe et le couple gyroscopique produit aura alors la direction de Y', et continuera à changer de direction alternativement comme il est indiqué en figure 3.

La direction du couple sur un plan pourrait aussi s'obtenir en disposant deux sous systèmes mécaniques contrôlés par un sous-système de contrôle, en apportant à chaque sous-système mécanique, la composante sur chacun des axes perpendiculaires inertiels sur le plan. Naturellement, dans ce cas, l'actionneur est beaucoup plus lourd, le double, et de plus grand volume que celui qui est schématisé en figure 7, bien que pour certaines applications, cette solution peut être requise pour d'autres motifs (pour accroître, par exemple). Dans cette solution alternative, les couples donnés par les deux sous systèmes mécaniques, avec leurs axes sur OY y OZ des figures 2 et 7, devront remplir la relation :

$$\frac{N_z}{N_y} = tg\alpha \qquad [7]$$

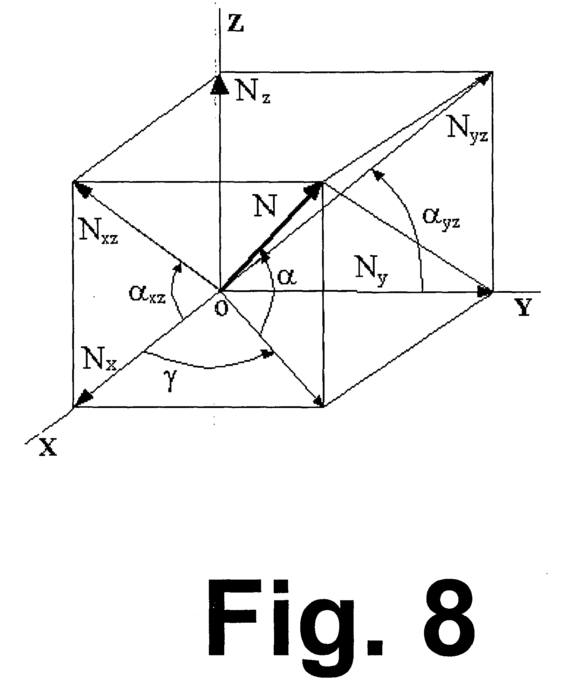

Pour examiner maintenant la possibilité de contrôle de la plate-forme spatiale sur trois axes, nous utiliserons la Fig. 8 et sur cette figure le système XYZ d'origine 0 où se trouvent les deux sous systèmes mécaniques (qui ne sont pas dessinés). L'axe OX correspond à la direction du couple gyroscopique produit par l'un des systèmes mécaniques en conditions initiales (semblable à la figure 2). L'axe OY correspond aux couples gyroscopiques produits par l'autre sous-système mécanique dans les mêmes conditions initiales.

Si maintenant la direction **ON** est définie dans l'espace en tant que direction requise pour le couple formé par les angles γ et α, obtenus par les senseurs ; leurs composantes sur les plans XZ et YZ seront respectivement les directions **ON$_{xz}$** y **ON$_{yz}$**, définies par les angles $\alpha_{xz}$ y $\alpha_{yz}$, fonctions des angles γ et α, de la forme suivante :

$$\tan\alpha_{xz} = \frac{\tan\delta}{\cos\gamma} \qquad [8]$$

$$\tan\alpha_{yz} = \frac{\tan\delta}{\sin\gamma} \qquad [9]$$

Si nous voulons obtenir un couple **N** selon la direction **ON**, il suffira de changer la direction du couple (la bissectrice) des anneaux de direction OX à l'angle $\alpha_{xz}$, ce qui donnera le couple **N$_{xz}$**. Ce couple sera constitué par **Ny** et le couple obtenu aura la direction ON requise, si les modules de **N$_{xz}$** et de **N$_y$** suivent la relation suivante entre γ et α :

$$\frac{N_{xz}}{N_y} = \frac{\sqrt{\cos^2\gamma + \tan^2\delta}}{\sin\gamma} \qquad [10a]$$

Un effet semblable peut être obtenu en tournant d'un angle $\alpha_{yz,,}$ l'axe des anneaux de direction initiale OY et en composant son moment **N$_{yz}$** avec **N$_x$**. Dans ce cas la relation qui doit rester entre ces deux couples est :

$$\frac{N_{yz}}{N_x} = \frac{\sqrt{\sin^2\gamma + \tan^2\delta}}{\cos\gamma} \qquad [10b]$$

Pour obtenir ces relations, on module à leur juste mesure les vitesses de nutation ou de spin pour varier les couples selon [6]. Le choix du sous-système mécanique dont on varie la direction du couple, se fera suivant chaque cas spécifique.

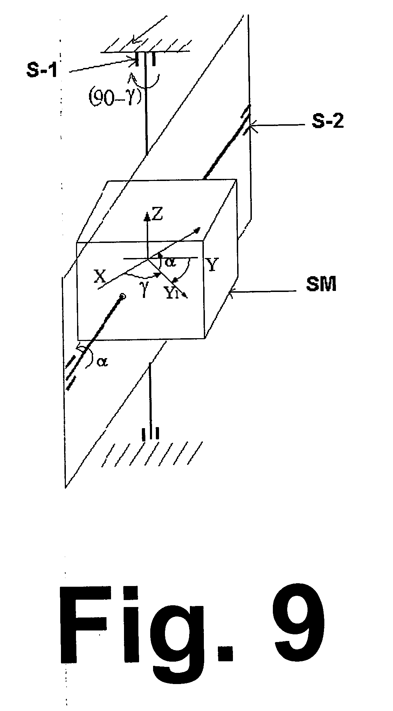

On peut aussi obtenir un couple dans une direction quelconque **ON** de l'espace de la manière représentée par la figure 9 où l'on ne dispose que d'un seul sous-système mécanique monté sur un cadre rotatif, de deux degrés de liberté, muni de servomoteurs, qui contrôle aussi le sous-système de commande de l'Actionneur Gyroscopique Avancé. Dans les conditions initiales, le couple d'anneaux **Ny** a la direction de l'axe OY. Si nous voulons que le sous-système mécanique mette le couple dans la direction **N,** formée par les angles $\gamma$ et $\alpha$, il faudra tourner tout l'ensemble du sous- système mécanique autour de l'axe Z d'un angle $\gamma$ et ensuite il faudra tourner sa bissectrice de l'angle $\alpha$. Cette solution, apparemment plus simple que celle de la figure 8 avec deux sous-systèmes mécaniques, peut alourdir l'ensemble parce que les servomoteurs du cadre doivent transmettre au satellite les couples gyroscopiques et ceux qui sont nécessaires pour le mouvement du dit cadre.

Comme ce qui a été indiqué dans la deuxième solution de contrôle sur deux axes, la direction du couple dans l'espace peut aussi s'obtenir si l'on dispose de trois sous-systèmes mécaniques qui apportent chacun la composante sur l'axe inertiel correspondant. Naturellement cette solution donne un ensemble plus lourd et plus encombrant que si on utilise celle présentée sur la Fig. 8 qui n'a besoin que de deux sous-systèmes mécaniques. Dans ce cas les axes actifs des trois sous-systèmes mécaniques sont dirigés suivant les axes OX, OY, OZ de la figure 8. Pour que la résultante des trois couples produits, $N_x$, $N_y$, y $N_z$, soit sur la direction **ON,** il faut que obtenir les relations :

$$\frac{N_y}{N_x} = \tan\gamma \qquad [11]$$

$$\frac{N_y}{N_z} = \frac{\sin\gamma}{\tan\delta} \qquad [12]$$

Il faudra donc moduler de façon appropriée les valeurs de spin ou de nutation de chaque sous-système mécanique.

L'Actionneur Gyroscopique Avancé est donc un système conçu pour le contrôle d'une plate-forme spatiale, autant sur un axe, que sur deux ou trois, capable de contrôler la plate-forme pour qu'elle puisse réaliser des manoeuvres plus ou moins complexes en boucle ouverte ou fermée. Nous décrivons ici sa façon d'agir lors d'une manoeuvre spatiale de base en boucle ouverte.

L'une des conditions primordiale dans l'application spatiale est d'obtenir une position angulaire déterminée du satellite en moins de temps que celui dont on dispose et avec la précision donnée.

Pour ce faire, les couples qui s'appliquent au satellite devront répondre à une stratégie temporaire déterminée. Normalement on ne cherchera pas à ce que le couple ait un module d'une valeur donnée, il suffira qu'il soit assez élevé pour remplir la fonction requise. Par conséquent l'Actionneur Gyroscopique Avancé peut fonctionner de deux façons de base en suivant les concepts déjà étudiés.

Façon discontinue : Il faut tourner les sous-systèmes mécaniques et les arrêter avant qu'il ne terminent un demi-cycle pour transmettre au satellite une vitesse angulaire constante.

Façon continue : Il faut laisser tourner les anneaux de façon continue et l'on obtient différentes position angulaires du satellite selon les conditions initiales.

Les deux façons sont représentés dans les figures 3, 4, 5 y 6.

Normalement, on changera la position angulaire du satellite en utilisant les deux façons principales précédentes combinées comme il suit :

Les anneaux étant au repos en position initiale $\theta_0 = 0$ (voir figure 2) et le satellite au repos, on prétend faire tourner le satellite d'un certain angle dans le minimum de temps possible.

En figure 3, on montre que la vitesse du satellite avec un mouvement continu des anneaux d'un sous-système mécanique, est nulle dans les conditions initiales :

$$\dot{\delta} = \frac{2H}{I_s}\sin\theta \qquad [13]$$

La vitesse maximale du satellite s'obtiendra pour $\theta = 90°$, c'est-à-dire :

$$\dot{\delta}_{max} = \frac{2H}{I_s} \qquad [14]$$

Le sous-système de contrôle connaît le $\delta_r$ du satellite que l'on veut calculer en partant de la position actuelle $\delta_0 = 0$ et avec le satellite au repos,

$$\dot{\delta} = 0 \, .$$

Les anneaux du sous-système mécanique tournent à une vitesse de spin constante, avec une position initiale de nutation $\theta_0 = 0$.

Le sous-système de contrôle déterminerait le temps minimal de la manoeuvre connaissant $\delta_r$ et le couple moteur de nutation. Ce temps serait le résultat de la somme des trois temps :

$$t_{min} = t_1 + t_2 + t_3 \qquad [15]$$

La valeur $t_1$ est le temps nécessaire pour donner l'impulsion maximale, qui serait la rotation de 0 à $\pi/2$ des anneaux avec l'accélération maximale ; elle serait obtenue à son tour en connaissant le couple de nutation maximale obtenu de l'ensemble moteur-anneau et en tenant compte des limites possibles en $\dot{\theta}_{max}$ imposés par l'ensemble moteur-réduction.

Le temps $t_3$ est le temps nécessaire pour freiner le satellite en donnant une impulsion contraire, de même module que le précédent. Pour ce faire, il faudrait donner l'ordre de fermer les anneaux depuis $\pi/2$ (où ils ont été envoyés pour la première impulsion jusqu'à 0).

Ce $t_3$ ne doit pas être nécessairement égal à $t_1$, puisque le comportement de l'ensemble moteur-anneau n'est pas exactement le même en ouvrant les anneaux qu'en les fermant.

Finalement le temps $t_2$ serait le temps nécessaire pour que le tour du satellite soit celui qui est requis, $\delta_r$ c'est-à-dire :

$$\delta_r = \delta_1 + \delta_2 + \delta_3 \qquad [16]$$

Le premier terme de l'addition est le tour durant l'impulsion initiale qui peut se déduire conjointement avec $t_1$.

La valeur de $\delta_3$ s'obtient par le freinage de façon analogue à $\delta_1$ bien qu'elles ne seront pas égales parce que les comportements du mécanisme quand il accélère ou quand il freine sont différents.

L'angle $\delta_2$ est obtenu maintenant par l'équation [16], et puisqu'en analysant l'élan initial on obtient la vitesse maximale du satellite $\dot{\delta}_{max}$, on peut obtenir $t_2$ de la façon suivante :

$$t_2 = \delta_2 / \dot{\delta}_{max} = \delta_2 I_s / 2H \qquad [17]$$

Avec les valeurs de $t_1$, $t_2$ et $t_3$ calculées sur le microordinateur de l'AGA, le système donnera les ordres suivants, aux moments indiqués comme il suit :

Ouverture des anneaux en $\theta_o = 0$ avec le couple maximale du moteur.

$$T_0 = t_0 = 0$$

Arrêt des anneaux en 90˚. Le satellite est lancé par sa vitesse maximale de rotation.

$$T_1 = t_1$$

Ordre de retour des anneaux au départ, ce qui entraine la décélération du satellite

$$T_2 = t_1 + t_2$$

Arrêt des anneaux et du satellite.

$$T_3 = t_1 + t_2 + t_3$$

## Revendications

1. Actionneur gyroscopique pour le contrôle de satellites, **caractérisé en ce qu'**il est composé de :

   a) des sous-systèmes mécaniques, qui suivant les besoins sont un, deux ou trois et qui ont chacun :

   $a_1$) un couple d'anneaux, d'inertie égale sur leurs axes principaux, disposés de manière concentriques,
   $a_2$) des moyens mécaniques pour le support des anneaux de façon à ce qu'il ne leur soit permis que deux degrés de liberté : de spin et de nutation,
   $a_3$) des moyens électromécaniques qui servent à réaliser les mouvements des anneaux ; ils sont disposés à l'intérieur des deux anneaux ou à l'extérieur, selon les dimensions des anneaux ; ils apportent aux anneaux une vitesse de spin et de nutation égales et contraire ; ils permettent la nutation de leur anneau correspondant en tours complets, dans le but de produire un vecteur de couple résultant selon la direction de précession normale du vecteur de vitesse de nutation ;

   b) un sous- système de contrôle qui est composé d'un microprocesseur programmé pour réaliser la commande de la rotation du satellite sur 1, 2 ou 3 axes, avec la capacité de contrôler à la fois 1, 2 ou 3 sous-systèmes mécaniques, et avec la capacité de communiquer avec l' ordinateur principal du satellite.

**2.** Actionneur gyroscopique pour le contrôle de satellite, suivant la revendication précédente, **caractérisé en ce que** le vecteur couple généré par chacun des sous-systèmes mécaniques possède une direction fixe inertielle, avec un sens cyclique et un module du couple contrôlable, qui s'ajoute vectoriellement à ceux des autres sous-systèmes mécaniques, et qui ne produit qu'une seul force résultante de direction fixe, avec un sens cyclique, et un module du couple, tous deux contrôlables par le sous-système de commande.

**3.** Actionneur gyroscopique pour la commande de satellite, suivant les revendications précédentes, **caractérisé en ce que** le sous-système mécanique possède les moyens électromécaniques pour tourner en nutation indépendamment des deux anneaux dans le but de les orienter pour la génération du couple de façon dirigée par le CPU.

**4.** Actionneur gyroscopique pour le contrôle de satellite, suivant la revendication 1, **caractérisé en ce que** le sous-système de contrôle à capacité de contrôler, en plus des sous-systèmes mécaniques, des cadres rotatifs qui ont jusqu'à deux degrés de liberté de rotation, avec leurs moyens électromécaniques correspondants pour réaliser ces rotations et sur lesquels sont accouplés indépendamment les sous-systèmes mécaniques.

**5.** Actionneur gyroscopique pour le contrôle de satellite, suivant les revendications 1 et 2, **caractérisé en ce qu'**avec un seul sous-système mécanique le vecteur de couple résultant est produit sous forme d'impulsions dont le sens, la direction et le module sont contrôlables selon une direction fixée dans l'espace, pour le contrôle d'attitude du satellite sur un axe.

**6.** Actionneur gyroscopique pour le contrôle de satellite, suivant les revendications 1,2 et 3, **caractérisé en ce qu'**avec un seul sous-système mécanique le vecteur de couple résultant est produit sous forme d'impulsions dont le sens, la direction et le module sont contrôlables selon une direction quelconque choisie sur un plan, pour le contrôle d'attitude du satellite sur deux axes.

**7.** Actionneur gyroscopique pour le contrôle de satellite, suivant les revendications 1 et 2, **caractérisé en ce qu'**avec deux sous-systèmes mécaniques le vecteur de couple résultant est produit sous forme d'impulsions dont le sens, la direction et le module sont contrôlables selon une direction quelconque choisie sur un plan, pour le contrôle d'attitude du satellite sur deux axes.

**8.** Actionneur gyroscopique pour le contrôle de satellite, suivant les revendications 1,2,3 et 4, **caractérisé en ce qu'**avec un seul sous-système mécanique supporté par un cadre rotatif d'un degré de liberté, le vecteur de couple résultant est produit sous forme d'impulsions dont le sens, la direction et le module sont contrôlables selon une direction quelconque dans l'espace, pour le contrôle d'attitude du satellite sur trois axes.

**9.** Actionneur gyroscopique pour le contrôle de satellite, suivant les revendications 1,2, et 4, **caractérisé en ce que** le sous-système mécanique étant supporté par un cadre rotatif de deux degrés de liberté, le vecteur est produit sous forme d'impulsions dont le sens, la direction et le module sont contrôlables selon une direction quelconque choisie dans l'espace, pour le contrôle d'attitude du satellite sur trois axes.

**10.** Actionneur gyroscopique pour le contrôle de satellite, suivant les revendications 1 et 2, **caractérisé en ce qu'**en combinant un sous-système mécanique, dont la capacité est indiquée dans la revendication 3, avec un autre sous-système mécanique qui ne dispose pas de cette capacité, le vecteur de couple résultant est produit sous forme d'impulsions dont le sens, la direction et le module sont contrôlables selon une direction quelconque choisie dans l'espace, pour le contrôle d'attitude du satellite sur trois axes.

**11.** Actionneur gyroscopique pour le contrôle de satellite, suivant les revendications 1 et 2, **caractérisé en ce qu'**en combinant trois sous-systèmes mécaniques sans la capacité indiquée dans la revendication 3, le vecteur de couple résultant est produit sous forme d'impulsions dont le sens, la direction et le module sont contrôlables selon une direction quelconque choisie dans l'espace, pour le contrôle d'attitude du satellite sur trois axes.

**12.** Actionneur gyroscopique pour le contrôle de satellite, suivant les revendications 1, **caractérisé en ce que** le sous-système de contrôle de rotation du satellite sur 1,2 ou 3 axes, avec la capacité de contrôler à la fois 1,2 ou 3 sous-systèmes mécaniques, avec la capacité de communiquer avec un ordinateur principal du satellite, , avec la capacité d' obtenir la lecture électronique des senseurs de l'actionneur et la capacité de recevoir les ordres de changement d'attitude, nécessaires pour la réalisation des manoeuvres d'attitude et pour l'information au sujet des manoeuvres d'attitude exécutées ; équipé d'un microprocesseur avec un logiciel qui, en plus de ce qu'il indique au départ, peut faire passer le satellite d'une position d'attitude initiale à une autre finale dénommée attitude- objectif, en réalisant pour ce faire les processus suivants :

a) connaissance de l'attitude actuelle du satellite au moyen de lecture des senseurs externes au propre actionneur gyroscopique mais qui sont situés à bord du satellite,

b) réception des ordres de la nouvelle attitude-objectif du satellite, qui inclut des rotations autour d'1, 2 ou 3 axes, selon les cas,

c) calcul des positions demandées en nutation et des vitesses de spin pour les anneaux contrôlés,

d) commande, aux moyens électromécaniques de l' exécution des mouvements de spin et de nutation pour le commencement de la manoeuvre,

e) réception du mouvement du satellite au moyen des lectures de ses senseurs,

f) calcul des nouvelles positions de nutation et des vitesses de spin requises pour les anneaux pour arrêter le mouvement du satellite et le laisser avec l'attitude-objectif,

g) commande aux moyens électromécaniques pour l'exécution des mouvements de spin et de nutation pour la fin de la manoeuvre,

h) vérification, par lecture des senseurs, que la nouvelle attitude du satellite obtenue diffère de l'attitude-objectif d' une valeur inférieure à l'erreur angulaire permise

# Fig. 1

# Fig. 2

# Fig. 3

# Fig. 4

# Fig. 5

# Fig. 6

# Fig. 7

# Fig. 8

# Fig. 9

AGA

MICROPROCESSEUR

| GENERATEUR D'ORDRES | $\delta_r$ | $V_2$ | GUIDAGE $K_2P_2(t)$ | $V_{31}$ $V_{32}$ | MS $K_3P_3(t)$ | N | SATELLITE $K_4P_4(t)$ | $\delta$ |

$\dot{\delta}$

$\theta$

| SENSEUR $K_1P_1(t)$ |

$\delta_m$   $\delta$

# Fig. 10

Fig. 11

**Fig. 12**

# Fig. 13

# Fig. 14

# Fig. 15

EP 1 993 017 A1

## INTERNATIONAL SEARCH REPORT

| | International application No. |
|---|---|
| | PCT/ ES 2006/000660 |

| A. CLASSIFICATION OF SUBJECT MATTER |
|---|
| see extra sheet |
| According to International Patent Classification (IPC) or to both national classification and IPC |

| B. FIELDS SEARCHED |
|---|
| Minimum documentation searched (classification system followed by classification symbols) |
| G05D 1/08, B64G 1/24, G01C21/24 |
| Documentation searched other than minimum documentation to the extent that such documents are included in the fields searched |
| Electronic data base consulted during the international search (name of data base and, where practicable, search terms used) |
| EPODOC, OEPMPAT |

| C. DOCUMENTS CONSIDERED TO BE RELEVANT | | |
|---|---|---|
| Category* | Citation of document, with indication, where appropriate, of the relevant passages | Relevant to claim No. |
| Y | ES 2188404 A1 (INGENIERIA DISENO Y ANALISIS) 16.06.2003, the whole the document | 1,4,5,10-12 |
| Y | US 6354163 B1 (HEIBERG et al.) 12.03.2002, paragraphs 3, 4, 39-41; figures | 1,4,5,10-12 |

☐ Further documents are listed in the continuation of Box C.   ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance. | |
| "E" earlier document but published on or after the international filing date | |
| "L" document which may throw doubts on priority claim(s) or which is cited to establish the publication date of another citation or other special reason (as specified) | "X" document of particular relevance; the claimed invention cannot be considered novel or cannot be considered to involve an inventive step when the document is taken alone |
| "O" document referring to an oral disclosure use, exhibition, or other means | "Y" document of particular relevance; the claimed invention cannot be considered to involve an inventive step when the document is combined with one or more other documents , such combination being obvious to a person skilled in the art |
| "P" document published prior to the international filing date but later than the priority date claimed | |
| | "&" document member of the same patent family |

| Date of the actual completion of the international search | Date of mailing of the international search report |
|---|---|
| 10 May 2007      (10.05.2007) | (21/05/2007) |
| Name and mailing address of the ISA/ O.E.P.M. Paseo de la Castellana, 75 28071 Madrid, España. Facsimile No.   34 91 3495304 | Authorized officer J. Olalde Sánchez Telephone No. +34 91 349 8469 |

Form PCT/ISA/210 (second sheet) (April 2007)

27

## INTERNATIONAL SEARCH REPORT

Information on patent family members

International application No.

PCT/ ES 2006/000660

| Patent document cited in the search report | Publication date | Patent family member(s) | Publication date |
|---|---|---|---|
| ES 2188404 | 16.06.2003 | WO 03042632 | 22.05.2003 |
| | | EP 1452830 | 01.09.2004 |
| | | EP 20020779585 | 11.10.2002 |
| | | US 2004173037 | 09.09.2004 |
| | | US 7051608 | 30.05.2006 |
| | | RU 2295705 | 20.03.2007 |
| | | RU 2004114847 | 27.03.2005 |
| | | JP 2005539202 T | 22.12.2005 |
| US6354163 3 B | 12.03.2002 | NONE | ------------ |

Form PCT/ISA/210 (patent family annex) (April 2007)

INTERNATIONAL SEARCH REPORT

| International application No. |
| --- |
| PCT/ ES 2006/000660 |

CLASSIFICATION OF SUBJECT MATTER

*G05D 1/08* (2006.01)
*B64G 1/24* (2006.01)

**EP 1 993 017 A1**

**Documents brevets cités dans la description**

- ES 0200482 W
- US 005826829 A
- US 005931421 A
- US 006135392 A